# EUROPÄISCHE PATENTANMELDUNG

(11) **EP 2 730 626 A1**
(43) Veröffentlichungstag der Anmeldung: **14.05.2014**
(21) Anmeldenummer: 12192207.4
(22) Anmeldetag: 12.11.2012
(51) Int. Cl.: C09J 5/06, C09J 151/06

(54) **Reaktiver Polyolefin-Heissschmelzklebstoff mit geringer Haftung zu nichtbeschichteten Aluminiumwerkzeugen und dessen Verwendung als Kaschier-Hotmelt**

(71) Anmelder: Sika Technology AG, 6340 Baar (CH)
(72) Erfinder: Janke, Doreen, 25486 Alveslohe (DE); Paschkowski, Kai, 21635 Jork (DE)
(74) Vertreter: Sika Patent Attorneys

(57) **Zusammenfassung**

Die vorliegende Erfindung betrifft Schmelzklebstoffzusammensetzungen, welche mindestens ein thermoplastisches, bei 25°C festes Silangruppen enthaltendes Poly-α-olefin und mindestens ein Paraffinwachs umfassen. Diese Schmelzklebstoffzusammensetzungen zeichnen sich im Vergleich zum Stand der Technik durch ein nur geringes Anhaften an nichtbeschichteten Aluminiumwerkzeugoberflächen aus, wobei sie gleichzeitig mit konventionellen Klebstoffen vergleichbar hohe Endfestigkeiten und Wärmestandsfestigkeiten sowie eine gute Beständigkeit gegenüber Umwelteinflüssen aufweisen. Die erfindungsgemäßen Schmelzklebstoffe eignen sich insbesondere als Kaschierklebstoffe für die Kaschierung von Folien aus thermoplastischen Olefinen, die eine ausreichende Stabilität für eine anschließende Tiefziehkaschierung aufweisen.

## Beschreibung

### Stand der Technik

Reaktive Polyolefinzusammensetzungen, die sich als Schmelzklebstoffe (auch Hotmelts genannt) einsetzen lassen, sind seit Langem bekannt. Sie bestehen meist aus silangepfropften Polyolefin-Prepolymeren, die durch Abmischung mit anderen Polymeren mit Harzen erhalten werden. Solche Klebstoffe bauen unmittelbar nach ihrer Applikation durch Abkühlen eine hohe Anfangsfestigkeit auf und erhalten ihre Endeigenschaften, insbesondere eine vorteilhafte Wärmestandsfestigkeit und Beständigkeit gegenüber Umwelteinflüssen, durch die allmählich ablaufende "Aushärtung", d.h. die chemische Reaktion der Silangruppen mit Luftfeuchtigkeit.

Für das Folienkaschieren, insbesondere für Vakuumtiefziehverfahren im Automobilbau, werden überwiegend Polyurethan (PUR)-Klebstoffe in unterschiedlicher Form eingesetzt. PUR-Klebstoffe werden überwiegend in dispergierter oder gelöster Form eingesetzt. Bei diesen Klebstoffsystemen ist aufgrund des hohen Molekulargewichts des Polyurethans das Arbeiten im Kontaktverfahren notwendig, d.h. die Klebstoffe müssen, um eine gute Adhäsion zum Trägerteil aufbauen zu können, auf das Trägerteil zusammen mit der Trägerflüssigkeit aufgetragen werden. Dazu wird die zu kaschierende Folie vorher mit einem Primer behandelt. Beim eigentlichen Kaschierprozess wird die Folie anschließend erhitzt und mittels Vakuum auf ein Trägerteil gepresst. Der auf dem Träger befindliche Klebstoff verbindet sich dabei mit dem Primer der Folie.

Nachteilig bei der Verwendung gelöster oder dispergierter Klebstoffe ist jedoch die Notwendigkeit, den Klebstoff auf das Trägerteil auftragen zu müssen. Die Trägerteile sind in der Regel dreidimensional verformt. Es ist daher erforderlich, den Klebstoff auf diesen verformten Träger zu sprühen, was in der Praxis relativ aufwändig ist. Besonders kritisch ist zudem das anfallende "Overspray", also die Tatsache, dass ein Teil der jeweiligen Klebstoffzusammensetzungen nicht auf das Trägerteil aufgebracht werden kann.

Um diesen Nachteil zu überwinden, wird in jüngster Zeit mehr und mehr versucht, Polyurethan-Klebstoffe in Form von reaktiven Schmelzklebstoffen für das Folienkaschierverfahren einzusetzen. Bei der Verwendung dieser ist es nicht erforderlich, das dreidimensional verformte Trägerteil einzusprühen, sondern es reicht aus, den Klebstoff auf die Folie aufzutragen. Dies ist erheblich einfacher, da die Folie zweidimensional ist. Der Klebstoff lässt sich mit verschiedenen Methoden leicht als Film auf die Folie auftragen, und ein "Overspray" kann vermieden werden.

Reaktive Polyurethan-Schmelzklebstoffzusammensetzungen, die sich für entsprechende Anwendungen eignen, sind bereits im Stand der Technik beschrieben. Sie bestehen meist aus Isocyanat-terminierten Polyurethanprepolymeren, die durch Umsetzung geeigneter Polyole mit einem Überschuss an Diisocyanaten erhalten werden. Solche Klebstoffe bauen unmittelbar nach ihrer Applikation durch Abkühlen eine hohe Anfangsfestigkeit auf und erhalten ihre Endeigenschaften, insbesondere eine vorteilhafte Wärmestandsfestigkeit und Beständigkeit gegenüber Umwelteinflüssen, durch die allmählich ablaufende "Aushärtung", d.h. die chemische Reaktion der Isocyanatgruppen mit Luftfeuchtigkeit. Der reaktive Polyurethanschmelzklebstoff weist bei der Verarbeitung ein deutlich geringeres Molekulargewicht auf, als entsprechende gelöste oder dispergierte Polyurethanklebstoffe.

Die heute beim Kaschieren eingesetzten Polyurethan-Klebstoffe weisen allerdings, unabhängig davon, ob sie gelöst, dispergiert oder als Schmelzklebstoff aufgetragen werden, gravierende Nachteile bei der Verwendung mit olefinischen Substraten auf. So ist in der Regel eine Vorbehandlung der entsprechenden Substrate notwendig, da der polare Polyurethan-Klebstoff sonst auf der unpolaren olefinischen Oberfläche nicht haften würde.

Dieser Nachteil von stark unterschiedlichen polaren Eigenschaften ist bei Klebstoffen auf Basis amorpher Poly-α-olefine bei Verwendung mit olefinischen Untergründen aufgrund der stärkeren Ähnlichkeit der Eigenschaften der Klebstoffe mit denen der zu behandelnden Folien wesentlich geringer. Trotz dieses Vorteils findet man in der Praxis jedoch kaum Klebstoffsysteme auf Basis von Poly-α-olefinen für Kaschieranwendungen. Der Grund dafür liegt darin, dass heute am Markt befindliche olefinische Klebstoffe meist nicht für ein Vakuumtiefziehkaschieren geeignet sind oder sonstige wesentliche Nachteile aufweisen.

Olefinische Klebstoffe sind beispielsweise als gelöste Systeme verfügbar, es besteht jedoch der Bedarf, die Verarbeitung von lösungsmittelhaltigen Klebstoffen zu vermeiden. Zudem sind zur Lösung von unpolaren, olefinischen Klebstoffen geeignete Lösungsmittel, besonders kritisch in ihrer Verwendung. Schmelzklebstoffe auf olefinischer Basis sind dagegen stark verbreitet, insbesondere auch in der Automobilindustrie. Sie werden meist als thermoplastische Klebstoffe, jedoch nicht für die Kaschierung dreidimensional verformter Trägerteile eingesetzt. Ohne eine chemische Aushärtung weist der Klebstoff jedoch in der Wärme keine ausreichende Kohäsion zum Trägerteil auf, um eine dauerhafte Stabilität zu gewährleisten.

Reaktive Polyolefinschmelzklebstoffe stellen, verglichen mit den bisher bekannten Klebstofftechnologien, eine relativ junge Entwicklung dar und finden zum Kaschieren im Automobilbereich derzeit noch keinen weitreichenden Einsatz. Aufgrund ihrer chemischen Basis, der Möglichkeit der Verarbeitung als Schmelzklebstoff ohne Trägerflüssigkeit und der chemischen Nachvernetzung mittels Silanhärtung, ist diese Technologie zum Kaschieren von olefinischen Substraten besonders geeignet. Heute finden sich beispielsweise erste Anwendungen von olefinischen Schmelzklebstoffen im Fahrzeugbereich. Im Vergleich zu polaren (beispielsweise Polyurethan-) Kaschierklebstoffen weisen die vorhandenen Olefinklebstofflösungen jedoch den Nachteil auf, dass sie eine sehr starke Haftung zu unbeschichteten und Teflon-beschichteten Aluminiumoberflächen aufbauen und somit problematisch in ihrer Verarbeitung mit entsprechenden Werkzeugen sind.

Daher sind solche Klebstoffe in der praktischen Anwendung der Kaschierung nicht geeignet. Kaschierte Teile lassen sich nur sehr schwer nach dem Kaschieren aus dem Werkzeug entnehmen. Dies macht einen Einsatz in der Praxis unmöglich.

Bei der Kaschierung, insbesondere von Folien aus thermoplastischen Olefinen, wie Polypropylen, ergibt sich die besondere Schwierigkeit, dass der Kaschierschmelzklebstoff keine Haftung zum Kaschierwerkzeug aufbauen darf. Beim Vakuum-Tiefziehkaschierverfahren wird der Klebstoff, in diesem Fall der reaktive Schmelzklebstoff, auf die Rückseite einer Dekorfolie aufgebracht und anschließend einer Tiefziehkaschierung unterzogen. Die Folie wird dazu samt Klebstoff erwärmt und auf ein Trägerteil, üblicherweise basierend auf Polypropylen oder harzgebundenen Naturfasern, gezogen. Dabei kommt der geschmolzene Klebstoff nicht nur mit dem zu kaschierenden Trägerteil, sondern im Bereich der Kanten des Trägerteils, an denen die Folie mit diesem verklebt wird, auch mit dem Kaschierwerkzeug in Kontakt.

Ein in einem solchen Verfahren einzusetzender Klebstoff darf daher nicht auf dem Werkzeug anhaften, da sonst das Bauteil dem Werkzeug anschließend nicht mehr ohne weiteres entnommen werden kann. Diese Problematik wird im Nachfolgenden als Problem des Anhaftens bezeichnet. Um ein Anhaften der Folie zu vermeiden, sind Kaschierwerkzeuge üblicherweise mit abweisenden Beschichtungen versehen. Besonders häufig werden Teflonbeschichtungen verwendet, da diese nicht nur eine gute abweisende Wirkung zeigen, sondern gleichzeitig eine hohe Standzeit aufweisen. Auch Silikonbeschichtungen werden in entsprechenden Werkzeugen eingesetzt, diese sind jedoch aufgrund der geringeren Standzeit weniger verbreitet.

Nachteil solcher Beschichtungen ist es, dass die Standzeiten in Abhängigkeit von der Art der Beschichtung mehr oder weniger lang sind. Die Erneuerung dieser Beschichtungen ist mit Prozessstillstandszeiten und hohen Kosten verbunden.

### Darstellung der Erfindung

Um die Problematik der aufwändigen Werkzeugbeschichtung einerseits und des Anhaftens an das Kaschierwerkzeug andererseits zu vermeiden, besteht ein Bedarf nach einem Schmelzklebstoff auf Polyolefinbasis, der für eine Vakuumkaschierung mit unbeschichteten Aluminiumwerkzeugen geeignet ist. Ein solcher Schmelzklebstoff würde eine kostenintensive Beschichtung ebenso wie ein regelmäßiges Erneuern der Beschichtung nicht länger erforderlich machen. Es war daher Aufgabe der vorliegenden Erfindung, eine wirksame Schmelzklebstoffzusammensetzung zur Verfügung zu stellen, welche die Nachteile des Standes der Technik überwindet und insbesondere auf einem Poly-α-olefin-Schmelzklebstoff beruht, der bei seiner Verarbeitung keine Anhaftung an unbeschichteten Aluminiumwerkzeugen zeigt.

Dabei hat es sich als überraschend herausgestellt, dass derartige Eigenschaften durch eine Schmelzklebstoffzusammensetzung, umfassend
a) mindestens ein thermoplastisches, bei 25°C festes Silangruppen enthaltendes Poly-α-olefin, und
b) mindestens ein Paraffinwachs,
erzielt werden können. Mit der erfindungsgemäßen Schmelzklebstoffzusammensetzung ist insbesondere eine starke Reduzierung des Anhaftens an unbeschichtete Aluminiumoberflächen und mit Teflon oder Silikonen beschichtete Aluminiumwerkzeuge verbunden. Dies erlaubt es, auf eine kostenintensive Beschichtung und ein häufiges Wechseln der Beschichtung der Aluminiumwerkzeuge zu verzichten.

Ein weiterer Aspekt der vorliegenden Erfindung ist die Verwendung der erfindungsgemäßen Schmelzklebstoffzusammensetzung zum Verkleben von Folien oder Naturfaserträgermaterialien. Weitere Aspekte der vorliegenden Erfindung betreffen Verbundkörper, umfassend ein erstes Substrat (S1), ein zweites Substrat (S2) und eine dazwischen aufgebrachte Schicht einer erfindungsgemäßen Schmelzklebstoffzusammensetzung sowie ein Verfahren zur Herstellung eines solchen Verbundkörpers.

### Wege zur Ausführung der Erfindung

In einem ersten Aspekt betrifft die vorliegende Erfindung eine Schmelzklebstoffzusammensetzung, umfassend a) mindestens ein thermoplastisches, bei 25°C festes Silangruppen enthaltendes Poly-α-olefin, und b) mindesteins ein Paraffinwachs.

Das bei 25°C flüssige Silan umfasst Silanverbindungen, in der das Silan mindestens eine Silyl-Alkoxy-Funktionalität enthält. Während der Aushärtung der Schmelzklebstoffzusammensetzungen reagieren solche Silangruppen zunächst unter Freisetzung von Alkoholen zu Silanolen, die unter Abspaltung von Wasser mit weiteren Silanolgruppen in der Schmelzklebstoffzusammensetzung reagieren können. Durch diese Kondensation bilden sich in der Schmelzklebstoffzusammensetzung Verknüpfungsstellen.

Vorzugsweise handelt es sich bei dem thermoplastischen, bei 25°C festen Silangruppen enthaltenden Poly-α-olefin um ein silangepfropftes Poly-α-olefin.

Bevorzugt weist das Silangruppen enthaltende Poly-α-olefin eine Erweichungstemperatur von 70°C bis 150°C, insbesondere von 80°C bis 120°C, und besonders bevorzugt von 90°C bis 110°C, auf. Die Erweichungstemperatur wird hierbei mit der Ring & Kugel-Methode in Anlehnung an die DIN EN 1427 gemessen.

Derartige Silangruppen enthaltende Poly-α-olefine sind dem Fachmann ohne Weiteres geläufig. Sie lassen sich beispielsweise durch Aufpfropfung von ungesättigtem Silan, wie Vinyltrimethoxysilan, auf ein Poly-α-olefin herstellen. Eine detaillierte Beschreibung zur Herstellung von silangepfropften Poly-α-olefinen findet sich beispielsweise in der US 5,994,474 und der DE 40 00 695 A1.

Besonders geeignet als festes Silangruppen enthaltendes Poly-α-olefin ist ein silangepfropftes Polyethylen oder Polypropylen.

Weitere bevorzugte Silangruppen enthaltende Poly-α-olefine sind silangepfropfte Poly-α-olefine, welche mittels Ziegler-Natta-Katalysatoren hergestellte Poly-α-olefine sind, auf welche Silangruppen aufgepfropft wurden. Insbesondere handelt es sich um silangepfropfte Polyethylen-Homopolymere oder Polypropylen-Homopolymere.

Der Pfropfungsgrad des silangepfropften Poly-α-olefins beträgt vorteilhafterweise mehr als 1 Gew.-%, insbesondere mehr als 3 Gew.-%, Silan, bezogen auf das Gewicht des Poly-α-olefins. Wird als silangepfropftes Poly-α-olefin ein nach dem Ziegler-Natta-Verfahren hergestelltes silangepfropftes Poly-α-olefin verwendet, so liegt der Pfropfungsgrad vorzugsweise zwischen 1 und 8 Gew.-%, insbesondere zwischen 1,5 und 5 Gew.-%. Wenn für das silangepfropfte Poly-α-olefin über Metallocen-Katalysatoren hergestellte Poly-α-olefine verwendet werden, liegt der Propfungsgrad hingegen vorzugsweise zwischen 8 und 12 Gew.-%.

Besonders bevorzugt ist es, wenn die erfindungsgemäße Schmelzklebstoffzusammensetzung mindestens zwei verschiedene Silangruppen enthaltende Poly-α-olefine umfasst. An meisten bevorzugt ist es, wenn eine Kombination aus Silan-gepfropften Poly-α-olefinen, erhältlich nach dem Ziegler-Natta-Verfahren, und Silan-gepfropften Polypropylenhomopolymeren, erhältlich nach dem Metallocen-Katalysatorverfahren eingesetzt wird.

In einer bevorzugten Ausführungsform beträgt der Anteil aller Silangruppen enthaltenden Poly-α-olefine in der Schmelzklebstoffzusammensetzung mehr als 40 Gew.-%, bevorzugt liegt er zwischen 50 und 95 Gew.-%, und besonders bevorzugt zwischen 60 und 80 Gew.-%.

Die erfindungsgemäße Schmelzklebstoffzusammensetzung enthält weiterhin mindestens ein Paraffinwachs. Bei dem Paraffinwachs handelt es sich bevorzugt um ein Paraffinwachs mit einen Schmelz- oder Erweichungspunkt im Bereich von 80 bis 130°C, besonders bevorzugt im Bereich von 90 bis 120°C. In einer ganz besonders bevorzugten Ausführungsform ist das Paraffinwachs ein Fischer-Tropsch-Wachs.

Hinsichtlich der Menge des in die Schmelzklebstoffzusammensetzung einzubeziehenden Wachses unterliegt die Erfindung keinen relevanten Beschränkungen mit der Ausnahme, dass der Anteil des Wachses nicht so hoch sein sollte, dass dies die Adhäsion des Klebstoffs wesentlich beeinträchtigt. Unter einer wesentlichen Beeinträchtigung soll im Rahmen dieser Erfindung verstanden werden, dass die Adhäsion einer Zusammensetzung mit Paraffinwachs an dasselbe Substrat mehr als 50 % geringer ist als bei einer Zusammensetzung, die anstelle des Paraffinwachses die gleiche Menge an Silangruppen-enthaltendem Poly-α-olefin enthält.

In einer bevorzugten Ausführungsform enthält die Schmelzklebstoffzusammensetzung bis zu 5 Gew.-% an Paraffinwachs. Ist der Anteil dieser Komponente höher, so wird die Adhäsion des Klebstoffs beispielsweise zu Polypropylen merklich beeinträchtigt. Ebenso ist es bevorzugt, wenn in der Schmelzklebstoffzusammensetzung mindestens 1 Gew.-%, besonders bevorzugt mindestens 2 Gew.-%, bezogen auf die Schmelzklebstoffzusammensetzung, an Paraffinwachs enthalten ist.

Neben dem Paraffinwachs können der Schmelzklebstoffzusammensetzung weitere wachsartige Komponenten beigegeben werden. Bei für Schmelzklebstoffzusammensetzungen gemäß der vorliegenden Erfindung geeigneten wachsartigen Komponenten handelt es sich beispielsweise um mit Hilfe eines Metallocen-Verfahrens herstellbare Wachse, wie Maleinsäureanhydridfunktionalisierte Polyolefine, insbesondere Maleinsäureanhydridfunktionalisierte Polypropylene. Derartige Wachse sollten vorzugsweise einen Erweichungspunkt im Bereich von 100 bis 180°C, insbesondere im Bereich von 120 bis 160°C, aufweisen. Hinsichtlich der Menge dieser wachsartigen Komponenten unterliegt die vorliegende Erfindung ebenfalls keinen relevanten Beschränkungen. Es hat sich jedoch als zweckmäßig herausgestellt, wenn der Anteil solcher zusätzlicher wachsartiger Komponenten nicht mehr als 15 Gew.-% beträgt. Bevorzugt liegt der Gehalt an zusätzlichen wachsartigen Komponenten im Bereich von 5 bis 12 Gew.-%.

Das Verhältnis der wachsartigen Komponenten zu dem Paraffinwachs sollte zweckmäßig im Bereich von etwa 1:1 bis etwa 1:3 liegen und insbesondere etwa 1:2 betragen.

Es kann vorteilhaft sein, wenn die erfindungsgemäße Schmelzklebstoffzusammensetzung neben dem Silangruppen enthaltenden Poly-α-olefin mindestens ein zusätzliches, bei 25°C festes thermoplastisches Poly-α-olefin enthält, das keine Siangruppen aufweist. Bei diesem Polymer kann es sich um ein Homo- oder Copolymer von ungesättigten Monomeren, insbesondere ausgewählt aus der Gruppe, umfassend Ethylen, Propylen, Butylen, Isobutylen, Isopren, Vinylacetat bzw. Vinylester mit C3- bis C12-Carbonsäuren und (Meth)acrylat handeln. Unter (Meth)acrylat im Rahmen dieser Erfindung werden sowohl Acrylate als auch Methacrylate verstanden. Besonders bevorzugt sind Ethylenvinylacetat (EVA), ataktische Poly-α-olefine, sowie Polypropylen und Polyethylen als Homopolymere in gepfropfter oder nicht gepfropfter Form.

Bevorzugt weisen diese festen thermoplastischen Polymere einen Erweichungspunkt, gemessen nach der Ring & Kugel Methode, von über 90°C, insbesondere zwischen etwa 90 und 130°C, auf. Das Molekulargewicht (Mn) dieser zusätzlichen Komponenten liegt vorzugsweise im Bereich zwischen etwa 7000 und 250000 g/mol.

Es kann vorteilhaft sein, wenn für die Herstellung der ataktischen Poly-α-olefine ohne Silangruppen Metallocen-Katalysatoren eingesetzt werden.

Besonders bevorzugt liegt das Gewichtsverhältnis von festen Silangruppen enthaltenden Poly-α-olefinen zu festen thermoplastischen Polymeren ohne Silangruppen im Bereich von etwa 1:1 bis 20:1. Als besonders vorteilhaft hat sich ein Anteil an festem thermoplastischem Polymer von etwa 5 bis 35%, insbesondere von etwa 15 bis 30 Gew.-%, bezogen auf das Gesamtgewicht der Schmelzklebstoffzusammensetzung, herausgestellt.

Die erfindungsgemäße Schmelzklebstoffzusammensetzung kann zweckmäßig als weitere Komponente einen die Reaktion der Silangruppen beschleunigenden Katalysator enthalten. Bei diesem Katalysator handelt es sich insbesondere um eine organische Phosphor- oder Zinn-Verbindung, insbesondere Dibutylzinnlaurat (DBTL). Als organische Phosphor-Verbindungen eignen sich vorzugsweise Phosphorsäureester, die zweckmäßig als Mischungen aus Mono-, Di- und Triestern der Phosphorsäure zum Einsatz kommen, die mit Alkanolen, insbesondere mit einer Kettenlänge im Bereich von 12 bis 24 Kohlenstoffatomen, verestert sind. Die Säurezahl der Phosphorsäureester liegt zweckmäßig im Bereich von etwa 120 bis 240 mg/KOH pro Gramm.

Der Katalysator ist bevorzugt in einer Menge von mehr als 0,05 Gew.-%, nicht jedoch mehr als 5 Gew.-%, insbesondere in einer Menge im Bereich von etwa 0,1 bis 0,5 Gew.-%, in die Schmelzklebstoffzusammensetzung einzubeziehen.

Darüber hinaus können in der erfindungsgemäßen Schmelzklebstoffzusammensetzung weitere Hilfs- und Zusatzstoffe, insbesondere solche, die ausgewählt sind aus der Gruppe umfassend Weichmacher, Haftvermittler, UV-Absorptionsmittel, UV- und Wärmestabilisatoren, optische Aufheller, Pigmente, Farbstoffe, Füllstoffe und Trocknungsmittel enthalten sein. Vorteilhaft in die Schmelzklebstoffzusammensetzung einzubeziehende UV-Stabilisatoren sind beispielsweise sterisch gehinderte Phenole. Ein vorteilhaft einzubeziehender optischer Aufheller ist beispielsweise 2,2-(2,5-Thiophendiyl)bis[5-(1,1-dimethylethyl)]-Benzoxazol, das kommerziell unter dem Handelsnamen Odyssey OB erhältlich ist.

Der Gehalt solcher zusätzlicher Inhaltsstoffe sollte jedoch vorzugsweise nicht mehr als 10 Gew.-% betragen. Insbesondere ist es bevorzugt, wenn die Summe aller vorstehend genannten zusätzlichen Inhaltsstoffe nicht mehr als 5 Gew.-%, bezogen auf das Gesamtgewicht der Schmelzklebstoffzusammensetzung, ausmacht.

In einer besonders bevorzugten Ausführungsform besteht die erfindungsgemäße Schmelzklebstoffzusammensetzung im Wesentlichen aus zwei thermoplastischen, bei 25°C festen Silangruppen enthaltenden Poly-α-olefinen, bis zu 5 Gew.-% Paraffinwachs, einem Maleinsäureanhydrid-funktionalisierten Polyolefinwachs, gegebenenfalls festem thermoplastischem Polymer, gegebenenfalls Katalysator sowie gegebenenfalls einem optischen Aufheller und, gegebenenfalls einem UV-Stabilisator.

Grundsätzlich erfolgt die Herstellung auf übliche, dem Fachmann für Schmelzklebstoffe bekannte Art und Weise.

Die erfindungsgemäßen Schmelzklebstoffzusammensetzungen werden verflüssigt, indem die thermoplastischen Inhaltsstoffe aufgeschmolzen werden. Dabei sollte die Viskosität der Schmelzklebstoffzusammensetzungen der Applikationstemperatur angepasst sein. Typischerweise liegt die Applikationstemperatur, bei der Klebstoff in einer gut verarbeitbaren Form vorliegt, im Bereich von 90 bis 200°C. Die Viskosität beträgt in diesem Temperaturbereich etwa 1500 bis 50000 mPa*s. Ist die Viskosität wesentlich höher, dann ist die Applikation schwierig, während bei einer Viskosität, die wesentlich niedriger als 1500 mPa*s ist, der Klebstoff so dünnflüssig ist, dass er beim Auftragen von der zu verklebenden Werkstoffoberfläche abläuft, bevor er sich aufgrund des Abkühlens verfestigt.

Das durch die Abkühlung erfolgende Erstarren und Verfestigen des erfindungsgemäßen Schmelzklebstoffes bewirkt einen schnellen Festigkeitsaufbau und hohe Anfangshaftfestigkeit eines Klebverbundes. Bei der Verwendung des erfindungsgemäßen Klebstoffes ist darauf zu achten, dass das Verkleben innerhalb der Zeit erfolgt, in der der Klebstoff noch nicht zu stark abgekühlt ist, d.h. das Verkleben muss erfolgen, solange der Klebstoff noch flüssig bzw. mindestens noch klebrig und verformbar ist. Zusätzlich zu dieser physikalischen Art der Verfestigung wird die erfindungsgemäße Schmelzklebstoffzusammensetzung auch nach dem Erkalten durch den Einfluss von Wasser, insbesondere von Luftfeuchtigkeit, innerhalb einer Zeitspanne von typischerweise wenigen Stunden oder Tagen weitervernetzen und an mechanischer Festigkeit gewinnen. Im Gegensatz zu den nicht reaktiven Schmelzklebstoffzusammensetzungen lassen sich reaktive Schmelzklebstoffzusammensetzungen nicht reversibel erhitzen und dadurch wieder verflüssigen. Somit ist der Einsatz derartiger Schmelzklebstoffzusammensetzungen insbesondere für Anwendungen vorteilhaft, in denen der verklebte Verbundkörper im Laufe seines Gebrauches bzw. Lebens in Kontakt mit hohen Temperaturen kommt, da die Verklebung bei solchen Temperaturen keinen Schaden nimmt. Ebenso ist der Einsatz von derartigen Schmelzklebstoffen dahingehend vorteilhaft, dass diese, durch die Vernetzung bedingt, bedeutend weniger kriechen.

Ein weiterer Aspekt der Erfindung betrifft einen Verbundkörper, umfassend ein erstes Substrat (S1), welches Kunststoff, insbesondere in Form einer Folie, umfasst, eine Schmelzklebstoffzusammensetzung wie vorstehend beschrieben oder eine vernetzte Schmelzklebstoffzusammensetzung, sowie ein zweites Substrat (S2), wobei die Schmelzklebstoffzusammensetzung oder die vernetzte Schmelzklebstoffzusammensetzung zwischen dem ersten Substrat und dem zweiten Substrat (S2) angeordnet ist.

Als Folie werden insbesondere biegsame flächige Folien aus Polyolefinen in einer Dicke von 0,05 Millimeter bis 5 Millimeter verstanden, die sich aufrollen lassen. Somit werden neben "Folien" (im strengen Sinn mit Dicken unter 1 mm), auch Abdichtungsbahnen, wie sie typischerweise zum Abdichten von Tunneln, Dächern oder Schwimmbädern in einer Dicke von typischerweise 1 bis 3 mm, in Spezialfällen sogar in einer Dicke bis maximal 5 mm, verwendet werden, verstanden. Derartige Polyolefin-Folien werden üblicherweise durch Streichen, Gießen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass Polyolefin-Folien weitere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Ruß, und Farbstoffe enthalten können. Das heißt, es werden auch derartige Folien als Polyolefin-Folien bezeichnet, welche nicht zu 100% aus Polyolefinen bestehen.

Das zweite Substrat (S2) kann von verschiedener Art und Natur sein. Es kann beispielsweise ebenfalls aus Kunststoff oder aus Fasermaterialien, insbesondere aus Naturfasern, aufgebaut sein. Bei dem Substrat handelt es sich vorzugsweise ebenfalls um ein flächiges Substrat, insbesondere in Form einer Folie oder in Form eines Vlieses.

Der beschriebene Verbundkörper ist beispielsweise eine Folie aus thermoplastischem Olefin, insbesondere für den Automobilbau, die eine für eine Tiefziehkaschierung geeignete Stabilität aufweist. Ein weiterer Aspekt der vorliegenden Erfindung betrifft daher die Verwendung der vorstehend beschriebenen Verbundkörper zur Herstellung dreidimensional verformter Körper im Rahmen eines Tiefziehverfahrens.

Ein weiterer Aspekt der vorliegenden Erfindung ist ein Verfahren zur Herstellung von Verbundkörpern, wie sie vorstehend beschrieben wurden. Dieses Verfahren umfasst die Schritte
(i) Aufschmelzen der erfindungsgemäßen Schmelzklebstoffzusammensetzung wie vorstehend beschrieben,
(ii) Applizieren der geschmolzenen Schmelzklebstoffzusammensetzung auf ein erstes Substrat (S1), welches bevorzugt Kunststoff, insbesondere eine Kunststofffolie, umfasst,
(iii) ggf. Erwärmen des ersten Substrats (S1),
(iv) Kontaktieren des zweiten Substrats (S2), bevorzugt einer Folie oder einem Naturfaserträgermaterial, mit der aufgeschmolzenen Klebstoffzusammensetzung.

Durch das Erhitzen der Folie (S1) wird diese weich und kann sich der Geometrie des Trägers anpassen, ohne dass Falten entstehen.

Bei den hier benutzten Polyolefin-Folien kann es sich um Dekorfolien handeln, die eine Oberflächenstruktur aufweisen. Diese Oberflächenstruktur kann beispielsweise vor oder während oder nach dem Verkleben eingeprägt werden.

Bevorzugt ist es weiterhin, wenn das vorstehend beschriebene Verfahren durch einen Schritt des Tiefziehens des Verbundskörpers, der sich nach dem Schritt (iv) anschließt weitergebildet wird.

Besonders vorteilhaft hierbei ist es, dass die Klebstoffzusammensetzung direkt auf die Polyolefin-Folie appliziert werden kann, und es nicht notwendig ist, zuvor einen "Primer" aufzubringen, wie dies zum Beispiel bei Polyurethandispersions-Klebstoffen der Fall ist.

Beim Presskaschierungsverfahren wird die aufgeschmolzene Schmelzklebstoffzusammensetzung auf den Träger aufgetragen. Die Verklebung des Trägers mit dem zweiten Substrat erfolgt unter Wärmeeinfluss durch Fügen und Pressen.

Die erfindungsgemäße Schmelzklebstoffzusammensetzung zeichnet sich insbesondere bei der Verarbeitung mit Aluminiumwerkzeugen dadurch aus, dass sie keine merkliche Anhaftung auf dieser zeigt. Somit kann eine kostenintensive Beschichtung dieser Aluminiumwerkzeuge und eine regelmäßige Erneuerung der Beschichtung vermieden werden.

Gleichzeitig zeigen die erfindungsgemäßen Schmelzklebstoffzusammensetzungen eine mit konventionellen Klebstoffen vergleichbare Klebewirkung und haben sich insbesondere für verklebte Folien, die einem anschließenden Tiefziehverfahren unterzogen werden, als vergleichbar mit konventionellen Polyurethanbasierenden Klebstoffsystemen gezeigt. Gegenüber diesen zeichnen sie sich aber dadurch aus, dass sie schon vor dem Tiefziehvorgang auf die Folie aufgebracht werden können und einen zusätzlichen Primer zur Verbesserung der Oberflächeneigenschaften der Polyolefinfolien entbehrlich machen. Der erfindungsgemäße Schmelzklebstoff härtet zudem mit Feuchtigkeit ohne Geruchsbildung rasch und vollständig aus und bildet dabei selbst bei dickschichtiger Applikation keine Blasen. Nach der Aushärtung verfügt der erfindungsgemäße Schmelzklebstoff über eine relativ hohe Endfestigkeit und Wärmestanzfestigkeit sowie eine gute Beständigkeit gegenüber Umwelteinflüssen.

Im Folgenden wird die Erfindung durch Beispiele illustriert.

### Beispiele

Die Rollschälfestigkeiten der in der folgenden Tabelle 1 dargestellten Zusammensetzungen wurden bestimmt.

**Tabelle 1**

| Bestandteil | Beispiel 1 | Beispiel 2 | Beispiel 3 | Beispiel 4 | VergleichsBeispiel 1 |
|---|---|---|---|---|---|
| Silan-gepfropftes Poly-α-olefin | 52,18 | 53,19 | 54,24 | 47,68 | 49,8 |
| Silan-gepfropftes Poly-α-olefin (10% Si)1 | 9,49 | 9,67 | 9,86 | 8,67 | 9,05 |
| Poly-α-olefin Wachs2 | 9,49 | 9,67 | 9,86 | 8,67 | 9,05 |
| Amorphes Poly-α-olefin3 | 23,72 | 24,18 | 24,65 | | |
| Amorphes Poly-α-olefin4 | | | | 21,67 | 22,64 |
| Klebrigmacher | | | | 8,67 | 9,05 |
| DBTL | | | | 0,1 | |
| UV-Stabilisator5 | 0,24 | 0,24 | 0,24 | 0,25 | 0,23 |
| Katalysator6 | 0,14 | 0,15 | 0,15 | | 0,15 |
| Parafinwachs7 | 4,74 | 2,9 | 0,99 | 4,33 | |
| Optischer Aufheller | | | | | 0,02 |

| | | | | | |
|---|---|---|---|---|---|
| 1 = Silan-gepfropftes Poly-α-olefin mit einem Silangehalt von 10%; 2 = Maleinsäureanhydrid-modifiziertes Polypropylen mit einem Erweichungspunkt von etwa 140° sowie einer Säurezahl von etwa 48 mg KOH/g; 3 = amorphes Poly-α-olefin mit einem Erweichungspunkt (nach der Ring & Kugel-Methode) im Bereich von 118 bis 130°C, einem Molekulargewicht Mn von 7300 sowie einem Gasübergangspunkt von - 28°C; 4 = amporphes Poly-α-olefin mit einem Erweichungspunkt von 118 ± 4°C, sowie einer Schmelzviskosität von 8000 ± 2000 mPa*s;5 = sterisch gehindertes Phenol; 6 = Reaktionsprodukt von P4O10 und eines Alkohols mit einer Säurezahl (in mgKOH/g) von 180; 7 = unfunktionalisiertes Fischer Tropsch Hart-Paraffin mit einer Dichte von 0,94 g/cm3, einem Molekulargewicht von 750 g/Mol sowie einem Tropfpunkt im Bereich von 108 bis 124°C. | | | | | |

Bei den Beispielen 1 bis 4 handelt es sich um erfindungsgemäße Zusammensetzungen. Die Beispiele 1 bis 3 unterscheiden sich jeweils nur in ihrem Gehalt an Paraffinwachs. Das Beispiel 4 unterscheidet sich von Beispiel 1 durch ein anderes amorphes Poly-α-olefin und den Zusatz eines Klebrigmachers.

Das Vergleichsbeispiel 2 basiert auf dem kommerziell erhältlichen Klebstoff SikaMelt® 9632.

Es wurden ebenfalls die Rollschälfestigkeiten von zwei Klebstoffzusammensetzungen gemäß dem Stand-der-Technik bestimmt, von denen das Vergleichsbeispiel 1 eine mit dem Beispiel 4 vergleichbare Zusammensetzung aufweist, in dem nur das Paraffinwachs nicht enthalten ist. Das Vergleichsbeispiel 2 stellt demgegenüber einen Polyurethanklebstoff gemäß dem Stand der Technik dar, der hinsichtlich seines Anhaftverhaltens an Aluminiumoberflächen günstige Eigenschaften zeigt.

Die Rollschälfestigkeiten aller Klebstoffe wurden wie folgt bestimmt. Von dem jeweiligen Klebstoff wird ein 100 µm Film auf Silikonpapier aufgezogen und im Transferverfahren auf die TPO-Folie (Prüfkörper 5 x 15 cm) aufgetragen. Anschließend wird das Silikonpapier vom Klebstoff abgezogen und die TPO-Folie, beschichtet mit dem Klebstoff, unter einen IR-Strahler gelegt und auf etwa 200 °C erwärmt, bis der Klebstoff aufgeschmolzen ist. Anschließend wird die TPO-Folie gegen ein Aluminiumblech in einer Presse für 40 Sekunden gepresst. Für die Beurteilung der Haftung auf Aluminium wird nach 5 Minuten Pressvorgang der Rollschälwert bestimmt. Die gemessenen Rollschälwerte sind in der folgenden Tabelle 2 dargestellt.

**Tabelle 2**

| | Rollschälwerte in N/cm |
|---|---|
| Beispiel 1 | 0,08 |
| Beispiel 2 | 0,08 |
| Beispiel 3 | 0,13 |
| Beispiel 4 | 0,41 |
| Vergleichsbeispiel 1 | 0,45 |
| Vergleichsbeispiel 2 | 0,25 |

Den Messwerten lässt sich entnehmen, dass die Zusammensetzung gemäß Beispiel 1 das geringste Anhaftverhalten an eine Aluminiumoberfläche zeigt. Selbst im Vergleich zum Klebstoff auf Polyurethanbasis ist das bestimmte Anhaften geringer. Demgegenüber zeigt der Klebstoff gemäß Vergleichsbeispiel 1 die höchsten Festigkeiten und haftet damit zu stark auf dem Aluminiumblech. Beispiel 4, das sich nur durch das Paraffinwachs als zusätzlicher Komponente von Vergleichsbeispiel 1 unterscheidet, zeigt gegenüber diesem geringere Rollschälwerte.

Aus den Beispielen wird ebenfalls ersichtlich, dass Vergleichsbeispiel 1 trotz seines Gehalts an einem Wachs nicht zu der benötigten Oberflächentrockenheit des Klebstoffs führt. Ein ausschließlich dieses Wachs enthaltender weist der Klebstoff nach dem Abkühlen eine Restklebrigkeit auf, die zu einem Anhaften von Klebstoffresten am Aluminiumwerkzeug führt.

## Patentansprüche

1. Schmelzklebstoffzusammensetzung, umfassend
a) mindestens ein thermoplastisches, bei 25°C festes Silangruppen enthaltendes Poly-α-olefin, und
b) mindestens ein Paraffinwachs.

2. Schmelzklebstoffzusammensetzung gemäß Anspruch 1, **dadurch gekennzeichnet, dass** das bei 25°C feste Silangruppen enthaltende Poly-α-olefin eine Erweichungstemperatur von 70 bis 150°C, insbesondere von 80 bis 120°C, und besonders bevorzugt von 90 bis 110°C, aufweist.

3. Schmelzklebstoffzusammensetzung gemäß Anspruch 1 oder 2, **dadurch gekennzeichnet, dass** das bei 25°C feste Silangruppen enthaltende Poly-α-olefin ein silangepfropftes Poly-α-olefin, vorzugsweise ein silangepfropftes Polyethylen oder Polypropylen, ist.

4. Schmelzklebstoffzusammensetzung gemäß einem der vorhergehenden Ansprüche, **dadurch gekennzeichnet, dass** das bei 25°C feste Silangruppen enthaltende Poly-α-olefin ein mittels Ziegler-Natta-Katalysatoren hergestelltes Poly-α-olefin ist, auf welches Silangruppen aufgepfropft wurden.

5. Schmelzklebstoffzusammensetzung gemäß einem der vorhergehenden Ansprüche, **dadurch gekennzeichnet, dass** die Zusammensetzung mindestens zwei verschiedene feste Silangruppen enthaltende Poly-α-olefine aufweist.

6. Schmelzklebstoffzusammensetzung gemäß einem der vorhergehenden Ansprüche, **dadurch gekennzeichnet, dass** die Zusammensetzung mindestens 40 Gew.-%, bevorzugt 50 bis 95 Gew.-%, und insbesondere 60 bis 80 Gew.-%, bezogen auf die Schmelzklebstoffzusammensetzung, an dem mindestens einen thermoplastischen, bei 25°C festen Silangruppen enthaltenden Poly-α-olefin enthält.

7. Schmelzklebstoffzusammensetzung gemäß einem der vorhergehenden Ansprüche, **dadurch gekennzeichnet, dass** das Paraffinwachs einen Schmelz- oder Erweichungspunkt im Bereich von 80 bis 130°C, bevorzugt 90 bis 120°C, ist.

8. Schmelzklebstoffzusammensetzung gemäß einem der vorhergehenden Ansprüche, **dadurch gekennzeichnet, dass** das Wachs ein Fischer-Tropsch-Wachs ist.

9. Schmelzklebstoffzusammensetzungen gemäß Anspruch 7 oder 8, **dadurch gekennzeichnet, dass** das Wachs in einer Menge von bis zu 5 Gew.-%, bezogen auf die Schmelzklebstoffzusammensetzung, in dieser enthalten ist.

10. Schmelzklebstoffzusammensetzung gemäß einem der vorangehenden Ansprüche, **dadurch gekennzeichnet, dass** die Zusammensetzung ferner einen die Reaktion von Silangruppen beschleunigenden Katalysator, insbesondere in Form einer organischen Phosphor- oder Zinnverbindung, enthält.

11. Schmelzklebstoffzusammensetzung gemäß Anspruch 10, **dadurch gekennzeichnet, dass** der Katalysator in einer Menge von 0,05 bis 5 Gew.-%, insbesondere in einer Menge von 0,1 bis 0,5 Gew.-%, bezogen auf die Schmelzklebstoffzusammensetzung, in dieser enthalten ist.

12. Schmelzklebstoffzusammensetzung gemäß einem der vorhergehenden Ansprüche, **dadurch gekennzeichnet, dass** die Zusammensetzung zusätzlich ein bei 25°C festes thermoplastisches Poly-α-olefin ohne Silangruppen, insbesondere ein ataktisches Poly-α-olefin ohne Silangruppen, enthält.

13. Verwendung einer Schmelzklebstoffzusammensetzung gemäß einem der Ansprüche 1 bis 12 zum Verkleben von Folien, insbesondere Polyolefinfolien, oder Naturfasermaterialien, insbesondere als Kaschierklebstoff.

14. Verbundkörper, umfassend
- ein erstes Substrat (S1), welches einen Kunststoff umfasst,
- eine Schmelzklebstoffzusammensetzung gemäß einem der Ansprüche 1 bis 12 oder eine aus dieser erhältliche vernetzte Schmelzklebstoffzusammensetzung sowie
- ein zweites Substrat (S2),
wobei die Schmelzklebstoffzusammensetzung oder die vernetzte Schmelzklebstoffzusammensetzung zwischen dem ersten Substrat (S1) und dem zweiten Substrat (S2) angeordnet ist.

15. Verbundkörper gemäß Anspruch 14, **dadurch gekennzeichnet, dass** das zweite Substrat (S2) ein Fasermaterial, insbesondere ein Naturfasermaterial, oder eine Folie, insbesondere aus Polyolefin, ist.

16. Verwendung eines Verbundkörpers gemäß Anspruch 14 oder 15 zur Herstellung dreidimensional verformter Körper im Rahmen eines Tiefziehverfahrens.

17. Verfahren zur Herstellung eines Verbundkörpers gemäß einem der Ansprüche 14 oder 15, umfassend die Schritte:
(i)Aufschmelzen einer Schmelzklebstoffzusammensetzung gemäß einem der Ansprüche 1 bis 12,
(ii) Applizieren der geschmolzenen Schmelzklebstoffzusammensetzung auf ein erstes Substrat (S1), welches bevorzugt Kunststoff umfasst,
(iii) gegebenenfalls Erwärmen des ersten Substrats (S1),
(iv) Kontaktieren des zweiten Substrats (S2), bevorzugt eines Naturfasermaterials oder einer Folie, insbesondere aus Polyolefin, mit der aufgeschmolzenen Schmelzklebstoffzusammensetzung.

18. Verfahren nach Anspruch 17, **dadurch gekennzeichnet, dass** der Verbundkörper nach dem Schritt (iv) einem Schritt des Tiefziehens unterzogen wird.
